# EUROPÄISCHE PATENTSCHRIFT

(11) **EP 4 592 539 B1**
(45) Veröffentlichungstag und Bekanntmachung des Hinweises auf die Patenterteilung: **02.09.2026**
(21) Anmeldenummer: 24154013.7
(22) Anmeldetag: 25.01.2024
(51) Int. Cl.: F16B 5/04, F16B 21/09, F16B 19/10, F16B 3/00

(54) **FASSADENBEFESTIGUNGSSYSTEM**
FACADE MOUNTING SYSTEM
SYSTÈME DE FIXATION DE FAÇADE

(43) Veröffentlichungstag der Anmeldung: 30.07.2025
(73) Patentinhaber: SFS Group International AG, 9435 Heerbrugg (CH)
(72) Erfinder: Pöltinger, Yves, 9430 St. Margrethen (CH)

(56) Entgegenhaltungen:
- CN-A- 111 664 154
- DE-U1- 9 308 171

## Beschreibung

Die vorliegende Erfindung befasst sich mit einem Verfahren zur Herstellung einer Befestigungsanordnung aus einer Verbundplatte sowie einem Plattenhalter und einem Niet, der zur Durchführung dieses Verfahrens geeignet ist; sowie der Befestigungsanordnung selbst. Der Anwendungsbereich bezieht sich somit auf die Befestigung von Fassadenelementen wie Wand-, Decken- oder Dachverkleidungsplatten an einem Baukörper bzw. einer Unterkonstruktion, insbesondere in der Ausführung als vorgehängte, hinterlüftete Fassade (VHF).

### HINTERGRUND

Als Gebäudehülle wird heute die Gesamtheit aller Bauteile verstanden, die ein Gebäude nach aussen abschliessen. Betrachtet man den Querschnitt einer exemplarischen Gebäudehülle von innen nach aussen, so wird auf ein statisch tragendes Bauteil (Wand, Dach, Decke) üblicherweise eine Isolationsschicht angeordnet und, beabstandet durch einen Lüftungspalt, davor ein vorgehängtes Fassadenelement platziert. Dieses Fassadenelement wird an einer Unterkonstruktion mechanisch befestigt, die üblicherweise über eine Metallkonstruktion direkt mit der statisch tragenden Wand verbunden ist.

Im modernen Wohn- und Gewerbebau muss die Gebäudehülle eine Vielzahl von komplexen Funktionen erfüllen; also Aufgaben des mechanischen Schutzes, der thermischen und akustischen Isolation sowie eines ansprechenden Designs.

Die vorgehängte hinterlüftete Fassade hat also die Aufgabe, als äusserer Abschluss der Gebäudehülle die funktionellen Schichten zu überdecken und vor Umgebungseinflüssen zu schützen. Die Montage der Fassadenelemente muss dabei einfach und sicher sein, deren Verankerung Druck- und Windsogkräften Stand halten können und ästhetische Ansprüche der Architektur erfüllen.

### DEFINITIONEN

Unter "Fassadenelementen" werden im Folgenden allgemein Bauteile verstanden, die als Teil einer Gebäudehülle an einer Unterkonstruktion befestigt werden sollen. Diese Fassadenelemente sind üblicherweise grossflächig, plan und haben eine quadratische oder rechteckige Grundform. Sie werden häufig aus Metall gefertigt, Faserzement, Kunststoffen, Naturstein oder Verbundmaterialien.

Im speziellen werden in der vorliegenden Beschreibung "Verbundplatten" oder Sandwichpaneele angesprochen, die auch als ACM-Paneele bezeichnet werden. ACM steht hierbei für Aluminium Composite Panel; diese bestehen aus einem der Unterkonstruktion zugewandten rückseitigen Deckblech, einem davon abgewandten Sichtblech und einer zwischen diesen Blechen liegenden, meist nicht-metallischen Kernlage. Die Bleche sind meist in 0.5mm starkem Aluminium ausgeführt, die Kernlage besteht häufig aus schwer entflammbarem, mineralisch gefülltem Polyester oder mineralischen Füllstoffen mit polymeren Bindemitteln. Die Gesamtstärke der Verbundplatten beträgt üblicherweise 3-6 mm. Die vorliegende Beschreibung bezieht sich mit den Begriffen Verbundplatte und Sandwichpaneelen auf alle Paneele mit einem rückseitigen Deckblech und einem vorderseitigen Sichtblech und dazwischenliegender, nicht-metallischer Kernlage. Technisch äquivalente Plattenaufbauten mit Decklagen und Kernmaterialien ähnlicher Struktur und/oder Funktion seien mitumfasst.

Unter "Halteelemente" werden mechanische Bauteile verstanden, die eine Verbindung zwischen einem Fassadenelement bzw. einer Verbundplatte und einer Unterkonstruktion herstellen. Die Halteelemente können so ausgelegt werden, dass sie als Teil einer Gebäudehülle sichtbar oder bewusst unsichtbar ausgelegt werden. Unsichtbar wird in dem Zusammenhang so verstanden, dass sie für einen Betrachter nach Fertigstellung der Gebäudehülle nicht (mehr) zu erkennen sind. Im engeren Sinn dieser Beschreibung ist mit einem Halteelement ein "Plattenhalter" gemeint, der an der Rückseite einer Verbundplatte angebracht werden kann und es erlaubt, die Verbundplatte als Ganzes an der Unterkonstruktion zumindest temporär zu befestigen (z.B. einzuhängen). Üblicherweise werden Plattenhalter durch zusätzliche Mittel an der Unterkonstruktion gegen Herabfallen oder Abheben (Windsog) gesichert.

Als "Unterkonstruktion" im Sinne der vorliegenden Beschreibung wird jede Vorrichtung verstanden, die es erlaubt, Fassadenelemente mit Hilfe von Halteelementen in einer definierten Position am Gebäude zu fixieren, auf die Fassadenplatte einwirkende Kräfte aufzunehmen und in das statisch tragende Bauteil (Gebäude) abzuleiten. Dazu weist eine Unterkonstruktion üblicherweise Profilträger auf, die die Funktion einer mechanischen Schnittstelle zum Plattenhalter erfüllen können. Eine besondere Variante einer Unterkonstruktion verwendet als Aufnahme für einen Plattenhalter einen horizontal anzuordnenden Profilträger gleichen Querschnitts wie der Plattenhalter selbst. Damit lässt sich die Materialvielfalt verringern.

Als "Niet" im Sinne dieser Erfindung ist ein Durchzugsniet gemeint, der aus einem Niet in Form einer Hohlniethülse mit einem Durchzugsdom besteht. Durchzugsdorn bedeutet, dass der Dorn an seinem Hinterende einen Kopf aufweist, der beim Setzvorgang durch den hohlen Schaft der Hohlniethülse komplett durchgezogen wird. Wegen der Anwendung in einem Hinterschnitt wird auch die Bezeichnung Hinterschnittniet verwendet.

### STAND DER TECHNIK

Das Gebrauchsmuster DE G 93 08 171.5 zeigt die Befestigung eines Haltelements an einer Verbundplatte mittels eines Gewindebolzens. Dieser Gewindebolzen hat an einem Ende einen flachen Bolzenkopf, der in eine ausgefräste, hinterschnittene Nut in der Plattenrückseite eingeführt wird. Die Form des Bolzenkopfs ist bevorzugt nicht kreisförmig, wodurch eine Verdrehsicherung im Hinterschnitt gewährleistet werden kann, was die spätere Verschraubung erleichtert.

Die Schrift EP 0 380 953 A1 zeigt eine Kombination aus Plattenhalter und Profilträger mit identischem Querschnitt. Der Plattenhalter besteht aus Abschnitten des Profilträgers und ist dergestalt ausgelegt, dass der Plattenhalter in einer um 180° gewendeten Stellung formschlüssig in den Profilträger eingreifen kann. Die vorerwähnte DE G 93 08 171.5 zeigt ebenfalls eine Plattenhalter / Profilträger-Kombination dieses Prinzips.

Die Schrift WO 2017 / 067 907 A1 zeigt ein Fassadenbefestigungssystem zur Verwendung mit Verbundplatten. Die Verbundplatte weist auf der Rückseite eine bis in die Kernlage reichende, schlüssellochförmige Ausfräsung auf. Die Ausfräsung bildet eine Einführöffnung und einen anschliessenden langlochähnlichem Haltebereich, der im Vergleich zur Einführöffnung so verengt ist, dass in der Kernlage ein Hinterschnitt entsteht. Ein Befestiger mit einem flachen, pilzförmigen Kopf kann durch die Einführöffnung eingefädelt werden und wird im verengten Haltebereich gehalten. Mittels des Befestigers lässt sich ein Plattenhalter unsichtbar an der Rückseite verschrauben. Die Ausrichtung des Schlüssellochs erfolgt so, dass der Haltebereich in Endlage nach oben zeigt. Es können auch zwei Schlüssellöcher parallel angeordnet werden, so dass ein Plattenhalter mit zwei Befestigern gesichert wird.

Im Stand der Technik wird häufig die Verwendung von Schraubverbindungen bei der Befestigung eines Plattenhalters an einer Verbundplatte vorgeschlagen, was eine geläufige und günstige Befestigungsmethode darstellt. Es werden verdrehsichere Bolzenköpfe bevorzugt, weil es sehr schwierig ist, den Schraubenkopf im Hinterschnitt durch ein Werkzeug zu kontern. Es müssen zudem üblicherweise selbstsichernde Muttern vorgesehen werden, um ein eventuelles Lösen der Schraubverbindung durch jahreszeitliche Temperaturschwankungen und Lastwechsel (Windsog /-druck) zu verhindern.

Technisch bedingt ist der Plattenhalter bei der Montage beweglich in der Längsausrichtung des Schlüsselloches. Wird der Plattenhalter nicht korrekt in den Endanschlag des Schlüsselloches gedrückt, ist die Endlage des Plattenhalters unter Umständen gegenüber der Sollposition verschoben. Zudem kann durch die Drehbewegung bei der Verschraubung die Position des Gewindebolzens verändert werden, was ebenfalls nachteilig ist. Bei Verwendung selbstsichernder Muttern ist zudem eine spätere Korrektur nur mit sehr hohem Kraftaufwand möglich.

Es ist daher Aufgabe der Erfindung, ein verarbeitungssicheres Verfahren und damit eine Befestigungslösung für einen Plattenhalter an der Rückseite einer Verbundplatte vorzuschlagen.

### BESCHREIBUNG DER ERFINDUNG

Diese Aufgabe wird durch das in Anspruch 1 beschriebene Verfahren gelöst unter Verwendung eines Nietes, der ab Anspruch 5 genauer ausgeführt wird. In Weiterführung resultiert eine Befestigungsanordnung nach Anspruch 10. Die Unteransprüche beschreiben jeweils nützliche Varianten und ergänzende Merkmale.

Das Verfahren beschreibt die Herstellung einer Befestigungsanordnung aus einer Verbundplatte und einem Plattenhalter. Die Verbundplatte ist als Sandwichpaneel ausgeführt mit einem rückseitigen Deckblech, einem vorderseitigen Sichtblech und einer dazwischenliegenden nicht-metallischen Kernlage. Auf der Rückseite der Verbundplatte ist mindestens eine schlüssellochförmige Nut mit wenigstens zwei Abschnitten vorgesehen. Die Nut weist an ihrem ersten Längsende einen ersten Abschnitt mit einer verbreiterte Einführöffnung auf und am anderen Längsende einen langlochförmigen Haltebereich mit einem Hinterschnitt in der Kernlage (zweiter Abschnitt).

Diese Nut weist anschaulich eine Schlüssellochform entsprechend dem Stand der Technik auf und umfasst eine langgestreckte, schlitzförmige Öffnung mit einer verbreiterten kreisrunden oder ovalen Aufweitung des Schlitzes. Letztere wird im Kontext dieser Erfindung am ersten Längsende angeordnet und als verbreiterte Einführöffnung bezeichnet. Das andere Längsende der Nut bildet einen langlochförmigen Haltebereich mit einem Hinterschnitt in der Kernlage (zweiter Abschnitt). Mit Hinterschnitt ist gemeint, dass im Haltebereich der Nut, hinter dem rückseitigen Deckblech, der Schlitz in der Kernlage breiter ist als die sichtbare Öffnung im Deckblech. Solche schlüssellochförmigen Öffnungen lassen sich durch Hinterschnittfräser auf bekannte Weise in einem Arbeitsgang anfertigen.

Der Plattenhalter wiederum weist ebenfalls mindestens eine Durchgangsöffnung auf. Die mechanische Verbindung zwischen der Verbundplatte und dem Plattenhalter wird durch einen Setzvorgang und eine daraus hervorgehende Nietverbindung erzielt.

Der verwendete Niet umfasst einen pilzförmigen Kopf und einen Schaft. Der Setzvorgang wird so gestaltet, dass der Niet mit seinem Kopf durch die Einführöffnung eingefädelt und dann im Hinterschnitt des Haltebereichs der Nut in der Verbundplatte platziert wird. Dadurch ragt das freie Ende des Schafts vom rückseitigen Deckblech ab.

Mit anderen Worten, die Durchmesser von Nietkopf und Einführöffnung sind so gewählt, dass der Kopf des Niets durch die Einführöffnung in die Verbundplatte passt, aber im langlochförmigen Haltebereich von der rückseitigen Deckplatte gehalten wird.

Ist der Nietkopf in der Verbundplatte angeordnet, wird der Plattenhalter via dessen Durchgangsöffnung auf das freie Ende des Schafts des Nietes aufgesteckt, so dass der Plattenhalter auf dem Deckblech aufliegt. Danach wird das freie Ende des Schafts durch ein Nietsetzgerät so umgeformt, dass der Niet einen Formschluss zwischen der Verbundplatte und dem Plattenhalter herstellt.

Insbesondere geeignet ist ein Niet, der als Durchzugsniet ausgestaltet ist, dessen Schaft und Kopf also eine durchgehende axiale Durchgangsöffnung mit einem Durchmesser D_{I} aufweisen. Ein zugehöriger Zugdorn weist einen Kopf mit Durchmesser D_{K} > D_{I} und einen Zugdornschaft auf. Der Zugdornschaft ist so dimensioniert, dass er in der axialen Durchgangsöffnung des Durchzugsniets mit geringem Spiel geführt werden kann. Vor dem Setzen des Niets bzw. vor dem Einfädeln in den Hinterschnitt der Verbundplatte wird derZugdorn so durch die axiale Durchgangsöffnung des Niets gesteckt, dass der Kopf des Zugdorns am Kopf des Niets anliegt und der Zugdorn aus dem Schaft des Nietes herausragt.

Der Setzvorgang wird nun dadurch bewirkt, dass das Nietsetzgerät zum Herstellen der Nietverbindung den Zugdorn betätigt und dadurch der Kopf des Zugdorns durch die axiale Durchgangsöffnung des Niets bewegt (gezogen) wird und durch die damit bewirkte Materialverdrängung der Formschluss zwischen der Verbundplatte und dem Plattenhalter erreicht wird.

Das Nietsetzgerät weist vorzugsweise ein rohrförmiges Mundstück auf mit einem im Wesentlichen zylindrischen, axial einseitig offenen Hohlraum und einer am Boden dieses Hohlraums angeordneten Aufnahme für den Zugdornschaft. Für den Setzvorgang wird der Hohlraum des Mundstücks so über dem freien Ende des Schafts angeordnet (übergestülpt), dass das Nietsetzgerät den Zugdornschaft funktionsgemäss erfassen kann. Das Mundstück wird mit seinem offenen, ringförmigen Ende auf der Rückseite des Plattenhalters aufliegend angeordnet. Dabei verbleibt jedoch zwischen dem freien Ende des Schaftes des Niets und dem Boden des Hohlraums ein berührungsloser Spalt von 0.1mm - 2mm, bevorzugt 0.3mm -1mm. Mit anderen Worten, bei Beginn des Nietsetzvorgangs, wenn das Nietsetzgerät anfängt, den Zugdorn durch die axiale Durchgangsöffnung zu ziehen, liegt das Schaftende des Niets nicht am Boden des Hohlraums an.

Als Nietsetzgerät kommt jedes entsprechende Gerät in Betracht, das ein Mundstück der beschriebenen Art aufnehmen und den Zugdorn betätigen kann. Es gibt beispielsweise Ausführungen mit pneumatischem oder elektrischem bzw. batterie-elektrischem Antrieb.

Durch die Bewegung des Kopfes des Zugdorns entlang der bzw. durch die axiale(n) Durchgangsöffnung des Niets wird eine Anpresskraft zwischen dem auf der Rückseite des Plattenhalters aufliegenden Mundstück und dem pilzförmigen Kopf des Nietes bewirkt. Daraus resultiert eine Verdrängung des die axiale Durchgangsöffnung umgebenden (Niet-)Materials sowohl radial nach aussen wie auch in axialer Zugrichtung des Zugdorns. Die Materialverdrängung in axialer Zugrichtung des Zugdorns wird jedoch nach einer gewissen Zeit durch das Anschlagen des freien Endes des Schaftes des Niets am Boden des Hohlraums gestoppt. Danach findet die Materialverdrängung nur noch radial nach aussen statt.

Beim Setzvorgang wird der Dorn vollständig durch den Niet durchgezogen und das Material des Schafts bzw. der Hülse dabei radial nach aussen und teilweise in Zugrichtung verdrängt. Dadurch wird das Material des Schafts in einen Formschluss mit den Bohrungen der beiden Verbindungspartner gebracht und eine feste Verbindung entsteht. Zudem kann, wo die Hülse des Niets den aufgesetzten Plattenhalter überragt, ein radialer Wulst ausgebildet werden, mit einem Aussendurchmesser grösser als die Durchstecköffnung im Plattenhalter.

Durch die beschriebene geometrische Beziehung zwischen dem Mundstück und dem Schaftende des Niets wird sichergestellt, dass anfänglich die stattfindende Materialverdrängung sowohl axial wie auch radial möglich ist. Nach dem Anschlagen des Schaftendes am Boden des Mundstücks ist nur die radiale Materialverdrängung möglich. Dadurch wird die Qualität der Nietverbindung und die Handhabungssicherheit verbessert.

Die Eigenschaften des oben beschriebenen, zur Durchführung des Verfahrens besonders geeigneten Durchzugsniets lassen sich wie folgt darstellen. Der Niet wird im Wesentlichen einen Schaft und einen Kopf aufweisen, wobei Kopf und Schaft eine durchgehende axiale Durchgangsöffnung mit Durchmesser D_{I} besitzen. Femer ist ein Zugdorn mit einem Kopf mit Durchmesser D_{K} > D_{I} und einem längsausgedehnten Zugdornschaft vorgesehen, wobei der Zugdorn in die axiale Durchgangsöffnung des Niets so einführbar ist, dass der Kopf des Zugdorns am Kopf des Niets anliegt.

Der Niet kann weiterhin vorteilhaft auf der schaftabgewandten Oberseite des pilzförmigen Kopfes eine axiale, vertiefte Ausnehmung aufweisen, die so dimensioniert ist, dass sie die versenkte Aufnahme des am Zugdornschaft angebrachten Kopfes erlaubt. Dies ist von Vorteil, weil es hilft, das resultierende Profil des Kopfes flacher zu gestalten.

Damit ist es im Idealfall möglich, den Kopf des Zugdorns im Nietkopf bündig zu versenken. Dadurch kann der Hinterschnitt in der Kernlage der Verbundplatte auf die Dimension en des Nietkopfes optimiert werden. Bevorzugt wird man die Form der Ausnehmung komplementär zum Kopf des Zugdorns auslegen.

Ein weiterer Vorteil lässt sich erzielen, wenn die schaftzugewandte Unterseite des pilzförmigen Kopfes des Nietes keine Ebene bildet, sondern eine konkave Form aufweist und vom Rand weg, zum Schaft hin, abfällt. Die Anpressfläche des Nietkopfes wird dadurch radial nach aussen von der Bohrung weg verlagert. Alternativ kann die schaftzugewandte Unterseite des pilzförmigen Kopfes des Nietes auch konturiert werden mit punkt- oder ringförmigen Strukturen, die sich beim Setzen stärker im Untergrund verankern können.

Die Kopfform des Niets kann kreisförmig, quadratisch oder oval ausgeführt werden. Je nach Anwendung kann vorteilhaft eine dieser Grundformen eingesetzt werden.

Bevorzugt wird der Niet aus Aluminium oder einer Aluminiumlegierung, insbesondere einer Aluminium-Magnesium Legierung gefertigt bzw. aus rostfreiem oder galvanisch beschichtetem Stahl. Die Auslegung erfolgt je nach geforderter Leistung und/oder Umgebungsbedingungen.

Die Auslegung der Dimensionen von Nietkopf, Niethülse und Zugdorn werden durch die Verbundplatte, die Wandstärke des Plattenhalters sowie die auftretenden Lasten bestimmt und lassen sich durch Versuche bestimmen. Die Angaben bei der Figurenbeschreibung sind beispielhaft.

Eine Befestigungsanordnung im Sinne dieser Erfindung umfasst eine Verbundplatte und einem Plattenhalter. Auf der Rückseite der Verbundplatte sind eine Mehrzahl von Nuten vorgesehen. Diese Nuten weisen eine Schlüsselloch-Form auf; es gilt hierzu die weiter oben ausgeführte Beschreibung.

Korrespondierend dazu weist der Plattenhalter eine Mehrzahl von Durchgangsöffnungen auf. Die Befestigung zwischen Verbundplatte und Plattenhalter(n) wird durch eine Mehrzahl von Setzvorgängen gemäss dem oben beschriebenen Verfahren hergestellt. Diese Setzvorgänge werden zumindest füreine Teilmenge der Durchgangsöffnungen mittels einer entsprechenden Anzahl Nieten gemäss obiger Beschreibung hergestellt. Teilmenge deshalb, weil Standardbauteile von Plattenhaltern vorgesehen werden können mit einer grösseren Anzahl von Durchgangsöffnungen als im einzelnen Anwendungsfall zur sicheren Befestigung nötig sind.

In einer vorteilhaften Variante werden mindestens zwei der schlüssellochförmigen Nuten so angeordnet, dass sie in Montageposition eine gemeinsame Längsachse aufweisen und so relativ zueinander angeordnet sind, dass die beiden Haltebereiche beabstandet einandergegenüber liegen. Konsequenterweise bilden die beiden Einführöffnungen dadurch die am weitesten voneinander entfernten Längsenden der beiden Nuten.

In einer Ausführungsform beträgt der axial gemessene Abstand D_{N} der beiden Ränder der Haltebereiche der Nuten zueinander zwischen dem 0.5x und 1.5x der axialen Länge eines Haltebereichs.

Die Vorteile einer Befestigungsanordnung mit mindestens zwei Nieten pro Plattenhalter liegt darin, dass das Einführen der Niete in die beiden Nuten / Schlüssellöcher mit ihren einander zugewandten Haltebereichen und abgewandten Einführöffnungen somit aus zwei Richtungen aufeinander zu erfolgt. Da der Plattenhalter bevorzugt mindestens zwei Bohrungen zur Aufnahme des Schaftes der Niete aufweist, definiert er auch den Sollabstand der beiden Niete. Sowohl diese Abstände wie auch die Toleranzen bei der Fertigung der Nuten (durch Ausfräsen aus der Verbundplatte) lassen sich so abstimmen, dass eine problemlose Montage möglich ist. Durch die Verwendung der Niete mit ihrer kraft- und formschlüssigen Fixierung wird somit ein sehr kompakter, spielfreier Verbund geschaffen.

Die Vorbereitung der Verbundplatten, sprich deren Zuschnitt und das Ausfräsen der schlüssellochförmigen Nuten erfolgt üblicherweise anhand von detaillierten Plänen in einer Werkhalle und das Anbringen der Plattenhalter erst vor Ort auf der Baustelle. Da die statischen und ästhetischen Vorgaben vorbekannt sind und die beschriebenen Halteelemente standardisiert werden können, lohnt sich u.U. auch eine Bearbeitung durch programmierbare Fräs- und Montageanlagen.

Als Vorteil der Schraubverbindungen wird häufig die Lösbarkeit der Verbindungen bei Montagefehlern oder Reparaturen genannt. Diese ist aber bei der beschriebenen Nietverbindung auch gegeben. Der am Plattenhalter aufsitzende Nietwulst lässt sich flächenbündig an der Oberfläche des Plattenhalters abtrennen bzw. ausbohren. Bei vorsichtigem Vorgehen bleibt der Plattenhalter entsprechend unbeschädigt und lässt sich erneut verwenden. Der verbleibende Niet kann aus dem Hinterschnitt ausgefädelt und durch einen neuen ersetzt werden.

Als Fassadenanordnung aus Verbundplatten-Fassadenelementen an einem Baukörper wird im Weiteren eine an einem Baukörper angebrachte Unterkonstruktion mit mindestens einem Profilträger bezeichnet, wobei eine Vielzahl von Verbundplatten und Plattenhaltern mittels Befestigungsanordnungen der oben beschriebenen Art vorgesehen sind.

Bevorzugt ist dabei, wenn die hakenförmige Verankerung eines Plattenhalters in eine komplementär ausgeführte Aufnahme des Profilträgers formschlüssig eingreifbar ausgeführt ist. Der Plattenhalter besteht beispielsweise aus Abschnitten des Profilträgers und ist so ausgelegt, dass der Plattenhalter in einer um 180° gewendeten Stellung formschlüssig in den Profilträger eingreifen kann.

In einer Weiterbildung einer Befestigungsanordnung wird zwischen Plattenhalter und Profilträger ein Justierelement wie eine Stellschraube angeordnet. Damit ist eine Höhenjustage der Verbundplatte im eingehängten Zustand möglich. Weiterhin kann vorgesehen sein, dass zwischen Plattenhalter und Profilträgerein Sicherungselement angeordnet ist, das den Plattenhalter und den Profilträger mechanisch verbindet und ein unbeabsichtigtes Lösen der Verbindung von Plattenhalter und Profilträger verhindert. Dies kann durch eine Verschraubung zwischen Plattenhalter und Profilträger erreicht werden z.B. mittels selbstbohrender gewindefurchender Schrauben. Auch lösbare Klammern oder Verklebungen sind realisierbar.

### BESCHREIBUNG DER FIGUREN

Figur 1 zeigt eine Haltevorrichtung bzw. Befestigungsanordnung gemäss Stand der Technik.
Figur 2 zeigt eine Ausführungsform einer Haltevorrichtung gemäss der vorliegenden Erfindung.
Figur 3 zeigt eine erste Version eines unverbauten Durchzugsniets ohne Zugdorn im Längsschnitt.
Figur 4 ist eine Schemazeichnung einer Nut gemäss Erfindung in einer Verbundplatte.
Figuren 5A bis C zeigen einen Setzvorgang gemäss einer Variante der Erfindung.
Figur 6 zeigt in Draufsicht einen exemplarischen Plattenhalter relativ zu den zwei Nuten incl. Nieten.
Fig. 7 zeigt einen Plattenhalter in schräger Draufsicht.
Figur 8 zeigt den Längsschnitt durch eine zweite Version eines unverbauten Durchzugsniets ohne Zugdorn.

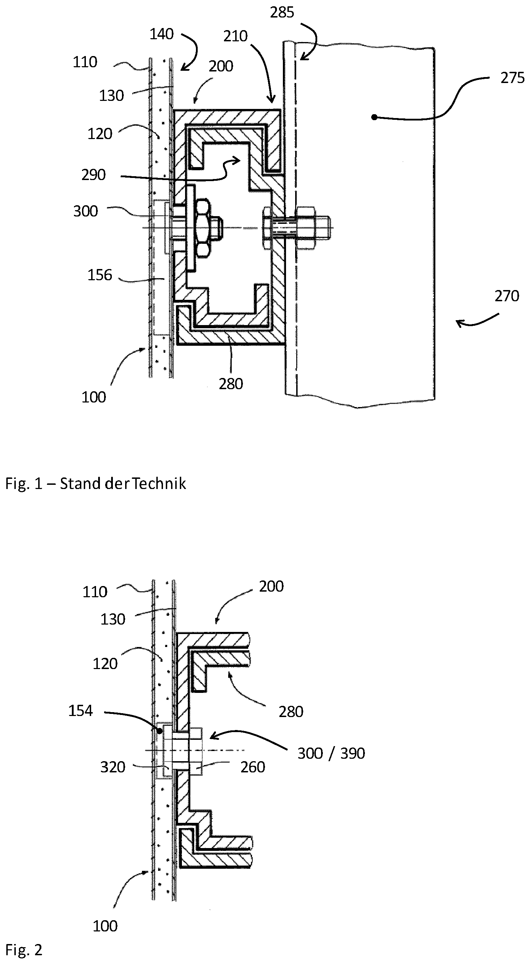

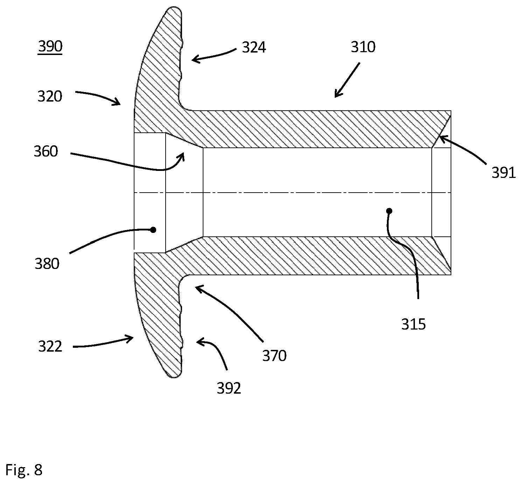

Figur 1 zeigt einen Stand der Technik mit einer Befestigungsanordnung für ein Verbundplatten-Fassadenelement 100, das über einen Plattenhalter 200 und einen Profilträger 280 an einer Unterkonstruktion 270 befestigt ist. Hierbei ist die Unterkonstruktion 270 ein vertikal angeordneter T-Träger 275, der über Konsolen (nicht gezeigt) an einem Baukörper (nicht gezeigt) angebracht ist und zwischen dem Baukörper und der durch das T-Kopfstück 285 gebildeten Montageebene einen hinterlüfteten Zwischenraum schafft. An einer Mehrzahl solcher vertikaler T-Träger 275 werden horizontale Profilträger 280 befestigt, hier mittels Verschraubung. Das in Fig. 1 im Querschnitt gezeigte Profil zeichnet sich dadurch aus, dass es, um 180° gewendet, geeignet ist, formschlüssig in ein identisches Profil eingehängt zu werden. Abschnitte des horizontalen Profilträgers 280 können also als Plattenhalter 200 zum Einsatz kommen (vgl. Fig. 8), was die Bauteilvielfalt verringern hilft. Die im Bild oben gezeigte Auskragung ist als hakenförmige Verankerung 210 konzipiert; sie hintergreift einen Teil des Profilträgers 280, der dadurch als Aufnahme 290 wirkt. Der Aufbau der Verbundplatte 100 folgt dem bereits beschriebenen Design aus vorderseitigem Sichtblech 110, nicht-metallischer Kernlage 120 und rückseitigem Deckblech 130. Der Befestiger 300 ist hier ein verschraubter Bolzen, der in einen Hinterschnitt 156 der Kernlage 120 eingreift und den Plattenhalter 200 an der Verbundplatte 100 fixiert. Referenzzeichen 140 verweist auf die Rückseite der Verbundplatte.

Figur 2 zeigt eine Haltevorrichtung gemäss der Erfindung. Die Verbundplatte 100 mit Sichtblech 110, Kernlage 120 und Deckblech 130 ist grundsätzlich identisch. Eine Unterkonstruktion ist weggelassen, Plattenhalter 200 und Profilträger 280 sind nur angeschnitten gezeigt. Im Schnitt erkennbar ist der in Montagelage waagerechte (senkrecht zur Zeichenebene) gezeigte langlochförmige Haltebereich 154 im Hinterschnitt. Der Befestiger 300 ist als Niet 390 ausgeführt. Er ist hier im endmontierten Zustand gezeigt mit dem pilzförmigen Kopf 320 in der Kernlage 120 und der durch den Setzvorgang umgeformten Hülse bzw. Schaft, die einen Umformwulst 260 ausgebildet hat. Grösse und Ausprägung des Niets 390 und des Wulsts 260 sind nur exemplarisch.

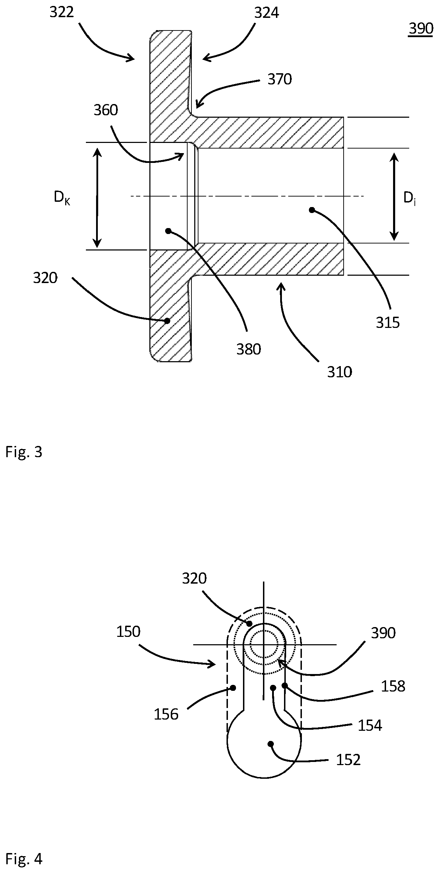

Figur 3 zeigt einen Niet 390 in einer ersten Ausführung im unverbauten Zustand im Längsschnitt. Er besteht aus einem hülsenförmigen Schaft 310 mit der durchgehenden axialen Durchgangsöffnung 315 und einem flachen, flanschartigen, pilzförmigen Kopf 320 mit einer schaftabgewandten Oberseite 322 und einer schaftzugewandten Unterseite 324. Der Schaft 310 hat in seinem kopffernen Teil einen Innendurchmesser Dᵢ, der in einer kommerziellen Ausführung 4.4mm beträgt. Der Hülsendurchmesser aussen beträgt im konkreten Fall 7.3mm. Der Kopf durchmesser liegt in dieser Ausführung bei 15.3mm. Die Hülse ist im Kopfbereich auf einen Durchmesser D_{K} von 5mm aufgeweitet und bildet somit eine Ausnehmung 380. Der Absatz 360 markiert der Übergang von D_{K} nach Dᵢ. Diese Übergangsfläche bildet auch die Kontaktfläche für den Zugdorn (hier nicht abgebildet).

Die Oberseite 322 und die Unterseite 324 sind nicht planparallel ausgeführt. Die Unterseite 324 ist leicht konkav (ca. 0.2mm auf den ca. 5mm breiten Kreisring der Unterseite) gestaltet und mündet am Schaft in eine Hohlkehle 370.

Figur 4 erläutert das Design einer Nut 150 in einer Verbundplatte gemäss der vorliegenden Erfindung. Mit Blick auf die Rückseite einer entsprechenden Verbundplatte markiert die gestrichelte äussere Umrandung (in Form eines regulären Langlochs) die Überlappung aus Schlüsselloch-Kontur 158 (durchgezogene Linie) und dem Hinterschnitt 156. Die Schlüsselloch-Kontur 158 ist hier als kreisrunde Einführöffnung 152 gezeigt, die in einen langlochförmigen Haltebereich 154 übergeht (durchgezogene Linie). Der Raum zwischen der Schlüsselloch-Kontur 158 und der gestrichelten äusseren Umrandung ist somit der Bereich des Hinterschnitts 156.

In gepunkteter Linie ist in Draufsicht ein eingesetzter Niet 390 gezeigt, sein flacher Kopf 320 liegt im Bereich des Hinterschnitts 156. Ein Plattenhalter ist in Figur 4 weggelassen ebenso der Umriss der Verbundplatte.

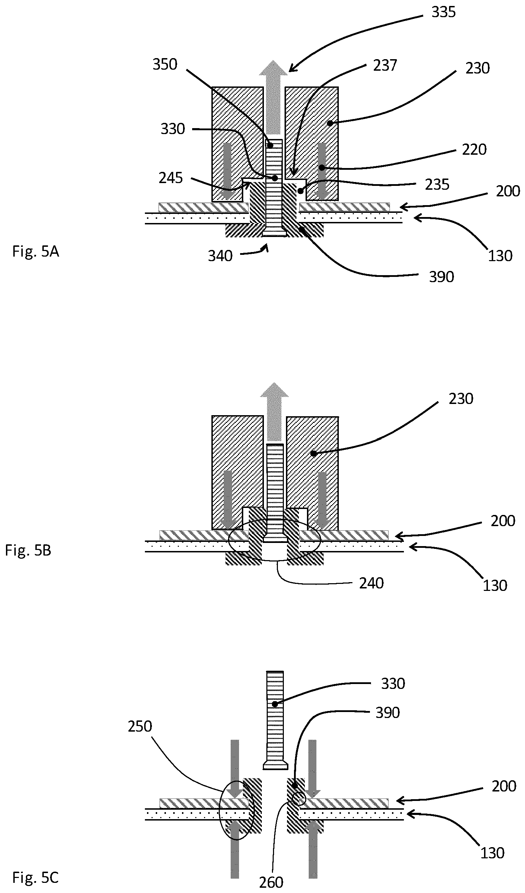

Die Figuren 5A bis 5C illustrieren schematisch den Setzvorgang gemäss den Verfahrensansprüchen. Von einer Verbundplatte 100 ist nur das rückseitige Deckblech 130 dargestellt, die Kernlage und das Sichtblech nicht. Der Plattenhalter 200 ist auf dem Deckblech 130 platziert und durch einen durchgesteckten Niet 390 so angeordnet wie in Figur 4 grundsätzlich gezeigt. Ein Zugdorn 330 ist so in der axialen Durchgangsöffnung des Niets 390 angeordnet, dass der Zugdorn-Kopf 340 im Kopf des Nietes 390 bündig versenkt ist. Das Mundstück 230 eines Nietsetzgeräts sitzt auf dem Plattenhalter 200 auf, nicht jedoch auf dem Niet 390. Zwischen dem kopffemen Ende des Nietschaftes 310 und dem Boden 237 des Hohlraums 235 verbleibt ein Spalt 245. Während des Setzvorgangs übt das Nietsetzgerät eine Zugkraft 335 auf den Zugdornschaft 350 aus. Eine entsprechende Gegenkraft (Anpresskraft 220) baut sich auf und drückt über den Kopf des Hohlniets 390 den Plattenhalter 200 und die Verbundplatte 100 (bzw. das rückseitige Deckblech 130) zusammen.

Sobald die Zugkraft 335 auf den Dorn den Widerstand durch den Absatz 360 (Figur 3) überwindet, formt der Kopf 340 des Zugdorns 330 das Material des Schafts des Niets um. Die Verdrängung radial nach aussen schafft einen Formschluss zwischen der Verbundplatte und der Bohrung im Plattenhalter. Diesen Verdrängungsvorgang zeigt Figur 5B im Umformbereich 240. Alle übrigen Merkmale der Zeichnung entsprechen Figur5A. Durch die axiale Verdrängung ist der Spalt 245 aufgefüllt.

Figur 5C zeigt den abgeschlossenen Setzvorgang. Der Zugdom 330 ist komplett durchgezogen und hat sich vom Niet 390 getrennt; das Material des Nietschaftes wurde etwas über den Rand der Bohrung des Plattenhalters 200 als Umformwulst 260 verdrängt (hier zur Verdeutlichung übertrieben dargestellt). Dieser Umformwulst 260 bewirkt damit zusammen mit dem Formschluss dauerhaft eine kraftschlüssige Verbindung, wie durch die Pfeile der Haltekräfte 250 markiert.

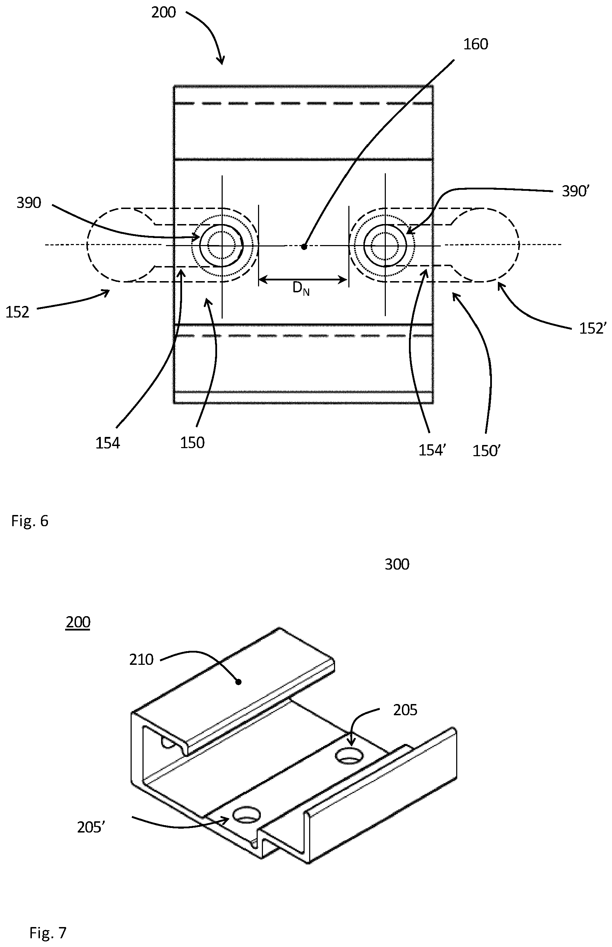

Figur 6 zeigt exemplarisch einen Plattenhalter 200 und dessen Anordnung relativ zu den Nuten 150, 150'. Im Bild "oben" entspricht der Anordnung dieser Haltevorrichtung bei der Montage an der Fassade. Die Nuten 150, 150' sind damit horizontal auf einer gemeinsamen Längsachse 160 angeordnet. Dabei weisen die beiden Haltebereiche 154 und 154' der Nuten aufeinander zu, die Einführöffnungen 152, 152' voneinander weg. Erneut punktiert wie in Figur 4 sind exemplarisch Hohlniete 390, 390 eingezeichnet. Die Hülsen sind dabei jeweils am Längsende der Haltebereiche 154, 154' angeschlagen. Der Abstand der beiden Haltebereiche ist mit D_{N} markiert. Da die Bohrungen im Plattenhalter mit den Schäften der Hohlniete 390, 390' fluchten müssen, wird dadurch die präzise Lage des Plattenhalters an der Verbundplatte gewährleistet. Ein Justagefehler wird somit mechanisch verhindert.

Figur 7 zeigt einen Plattenhalter 200 mit zwei Durchgangsöffnungen 205, 205' sowie der hakenförmigen Verankerung 210. Die Formgebung entspricht dem Plattenhalter von Figur 1 bzw. 2.

Figur 8 zeigt einen Durchzugsniet bzw. Niet 390 in einer zweiten Version. Der grundsätzliche Aufbau entspricht dem von Figur 3 mit Schaft 310, Kopf 320 und axialer Durchgangsöffnung 315. Letztere verfügt am kopfseitigen Ende nahe der Oberseite 322 ebenfalls über eine vergrösserte Ausnehmung 380 und einen Absatz 360.

Statt einer konkaven Unterseite 324 wurde hier ein Design gewählt mit einer texturierten Oberfläche 392. Dies können z. B. punkt- oder ringförmige, aus der Oberfläche hervorgehobene Strukturen sein. Die Hohlkehle 370 markiert den Übergang zwischen der Unterseite 324 und der Oberfläche des Schaftes 310. In einer weiteren Ausführungsform kann am kopffernen Ende des Schaftes 310 eine von innen nach aussen gerichtete trichterförmige Aufweitung 391 vorgesehen werden. Diese kann beitragen, die Ausbildung des Umformwulstes (260 in Figur 5C) zu erleichtern.

## Patentansprüche

1. Verfahren zur Herstellung einer Befestigungsanordnung aus einer Verbundplatte (100) und einem Plattenhalter (200), wobei
- die Verbundplatte (100) als Sandwichpaneel ausgeführt ist mit einem rückseitigen Deckblech (130), einem vorderseitigen Sichtblech (110) und einer dazwischenliegenden nicht-metallischen Kernlage (120); und
- auf der Rückseite (140) der Verbundplatte (100) mindestens eine schlüssellochförmige Nut (150) vorgesehen ist; die an ihrem ersten Längsende eine verbreiterte Einführöffnung (152) aufweist und am anderen Längsende einen langlochförmigen Haltebereich (154) mit einem Hinterschnitt (156) in der Kernlage (120); und
- der Plattenhalter mindestens eine Durchgangsöffnung (205) aufweist wobei
- die mechanische Verbindung zwischen der Verbundplatte (100) und dem Plattenhalter (200) durch einen Setzvorgang und eine daraus hervorgehende Nietverbindung erzielt wird, indem
- ein Niet (390), umfassend einen pilzförmigen Kopf (320) und einen Schaft (310), mit seinem Kopf (320) durch die Einführöffnung (152) eingefädelt und dann im Hinterschnitt (156) des Haltebereichs (154) der Nut (150) in der Verbundplatte (100) platziert wird, so dass das freie Ende des Schafts (310) vom rückseitigen Deckblech (130) abragt;
- der Plattenhalter (100) via dessen Durchgangsöffnung (205) auf das freie Ende des Schafts (310) des Nietes (390) aufgesteckt wird, so dass der Plattenhalter (200) auf dem Deckblech (130) aufliegt;
- das freie Ende des Schafts (310) durch ein Nietsetzgerät so umgeformt wird, dass der Niet (390) einen Formschluss zwischen der Verbundplatte (100) und dem Plattenhalter (200) herstellt.

2. Verfahren nach Anspruch 1, **dadurch gekennzeichnet, dass**
- der Niet (390) als Durchzugsniet ausgestaltet ist, dessen Schaft (310) und Kopf (320) eine durchgehende axiale Durchgangsöffnung (315) mit Durchmesser D_{I} aufweisen;
- ein Zugdorn (330) mit einem Kopf (340) mit Durchmesser D_{K} > D_{I} und einem Zugdornschaft (350) vorgesehen ist,
- wobei vor dem Setzen des Niets (390) der Zugdorn (330) so durch die axiale Durchgangsöffnung (315) des Niets (390) gestecktwird, dass der Kopf (340) des Zugdorns (330) am Kopf (320) des Niets (390) anliegt; und
- der Setzvorgang dadurch bewirkt wird, dass das Nietsetzgerät zum Herstellen der Nietverbindung den Zugdorn (330) betätigt; und dadurch
- der Kopf (340) des Zugdorns (330) entlang der axialen Durchgangsöffnung (315) des Niets (390) bewegt wird und durch die damit bewirkte Materialverdrängung der Formschluss zwischen der Verbundplatte (100) und dem Plattenhalter (200) erzielt wird.

3. Verfahren nach Anspruch 2, **dadurch gekennzeichnet, dass**
- das Nietsetzgerät ein rohrförmiges Mundstück (230) aufweist mit einem Wesentlichen, zylindrischen, axial einseitig offenen Hohlraum (235) und einer am Boden (237) dieses Hohlraums (235) angeordneten Aufnahme für den Zugdornschaft (350),
- wobei für den Setzvorgang der Hohlraum (235) des Mundstücks (230) so über dem freien Ende des Schafts (310) angeordnet wird, dass das Nietsetzgerät den Zugdornschaft funktionsgemäss erfassen kann,
- und das Mundstück (230) auf der Rückseite des Plattenhalters (200) aufliegend angeordnet ist,
- jedoch zwischen dem freien Ende des Schaftes (310) des Niets (390) und dem Boden (237) des Hohlraums (235) ein berührungsloser Spalt von 0.1mm - 2mm, bevorzugt 0.3mm -1mm verbleibt.

4. Verfahren nach Anspruch 3, **dadurch gekennzeichnet, dass** durch die Bewegung des Kopfes (340) des Zugdorns (330) entlang der axialen Durchgangsöffnung (315) des Niets (390)
- zwischen dem auf der Rückseite des Plattenhalters (200) aufliegenden Mundstück (230) und dem pilzförmigen Kopf (320) des Nietes (390) eine Anpresskraft (220) bewirkt wird
- und eine Verdrängung des die axiale Durchgangsöffnung (315) umgebenden Materials sowohl radial nach aussen wie auch in axialer Zugrichtung des Zugdorns (330) resultiert, wobei die Materialverdrängung in axialer Zugrichtung des Zugdorns (330) durch das Anschlagen des freien Endes des Schaftes (310) des Niets (390) am Boden (237) des Hohlraums (235) gestoppt wird,
- und die Materialverdrängung nur noch radial nach aussen erfolgt.

5. Niet (390) zur Durchführung des Verfahrens gemäss Anspruch 2-4, umfassend
- einen Schaft (310) und einen Kopf (320), wobei Kopf und Schaft eine durchgehende axiale Durchgangsöffnung (315) mit Durchmesser D_{I} aufweisen;
- einen Zugdorn (330) mit einem Kopf (340) mit Durchmesser D_{K} > D_{I} und einem längsausgedehnten Zugdornschaft (350),
- wobei der Zugdorn (330) in die axiale Durchgangsöffnung (315) des Niets (390) so einführbar ist, dass in Endlage der Kopf (340) des Zugdorns (330) am Kopf (320) des Niets (390) anliegt.

6. Niet (390) nach Anspruch 5, **dadurch gekennzeichnet, dass** auf der schaftabgewandten Oberseite (322) des pilzförmigen Kopfes (320) eine axiale vertiefte Ausnehmung (380) vorgesehen ist, die so dimensioniert ist, dass sie die versenkte Aufnahme des am Zugdornschaft (350) angebrachten Kopfes (340) erlaubt.

7. Niet (390) nach Anspruch 5-6, **dadurch gekennzeichnet, dass** die schaftzugewandte Unterseite (324) des pilzförmigen Kopfes (320) des Nietes (390) keine Ebene bildet, sondern eine konkave Form aufweist und vom Rand weg, zum Schaft (310) hin, abfällt.

8. Niet (390) nach Anspruch 5-7, **dadurch gekennzeichnet, dass** der pilzförmige Kopf (320) des Niets (390) eine kreisförmige, quadratische oder ovale Grundform aufweist.

9. Niet (390) nach Anspruch 5-8, **dadurch gekennzeichnet, dass** der Niet (390) aus Aluminium oder einer Aluminiumlegierung, insbesondere einer Aluminium-Magnesium Legierung gefertigt ist bzw. aus rostfreiem oder galvanisch beschichtetem Stahl.

10. Befestigungsanordnung aus einer Verbundplatte (100) und einem Plattenhalter (200), **dadurch gekennzeichnet, dass**
- auf der Rückseite (140) der Verbundplatte (100) eine Mehrzahl von Nuten (150, 150') vorgesehen ist; und
- der Plattenhalter (200) eine Mehrzahl von Durchgangsöffnungen (205, 205') aufweist; und
- die Befestigung zwischen Verbundplatte (100) und Plattenhalter (200) hergestelltwird durch eine Mehrzahl von Setzvorgängen gemäss dem Verfahren nach Anspruch 1-4
- zumindest für eine Teilmenge der Durchgangsöffnungen (205, 205') mittels einer entsprechenden Anzahl Nieten (390) gemäss Anspruch 5-9.

11. Befestigungsanordnung nach Anspruch 10, **dadurch gekennzeichnet, dass** mindestens zwei der schlüssellochförmigen Nuten (150, 150') so angeordnet sind, dass sie in Montageposition eine gemeinsame Längsachse (160) aufweisen und so relativ zueinander angeordnet sind, dass die beiden Haltebereiche (154, 154') beabstandet gegenüber liegen.

12. Befestigungsanordnung nach Anspruch 10, **dadurch gekennzeichnet, dass** der axial gemessene Abstand D_{N} der beiden Ränder der Haltebereiche (154, 154') der Nuten (150, 150') zueinander zwischen dem 0.5x und 1.5x der axialen Länge eines Haltebereichs (154, 154') entspricht.

13. Fassadenanordnung aus Verbundplatten-Fassadenelementen an einem Baukörper, umfassend eine an einem Baukörper angebrachte Unterkonstruktion (270) mit mindestens einem Profilträger (280) sowie einer Vielzahl von Verbundplatten (100) und Plattenhaltern (200), hergestellt unter Verwendung von Befestigungsanordnungen nach Anspruch 10 bis 12.

14. Fassadenanordnung nach Anspruch 13, **dadurch gekennzeichnet, dass** jeder Plattenhalter (200) einen hakenförmigen Anker (210) aufweist, die in eine komplementär ausgeführte Aufnahme (290) des Profilträgers (280) formschlüssig eingreifbar ausgeführt ist.

15. Fassadenanordnung nach Anspruch 13-14, **dadurch gekennzeichnet, dass** zwischen Plattenhalter (200) und Profilträger (280) ein Sicherungselement angeordnet ist, das den Plattenhalter (200) und dem Profilträger mechanisch verbindet und ein unbeabsichtigtes Lösen der Verbindung von Plattenhalter (200) und Profilträger (280) verhindert.

## Claims

1. Method for manufacturing a fastening assembly consisting of a composite panel (100) and a panel holder (200), wherein
- the composite panel (100) is configured as a sandwich panel having a rear cover sheet (130), a front facing sheet (110), and a non-metallic core layer (120) located between them; and
- at least one keyhole-shaped groove (150) is provided on the rear side (140) of the composite panel (100); which has a widened insertion opening (152) at its first longitudinal end and, at the other longitudinal end, a slotted retaining region (154) with an undercut (156) in the core layer (120); and
- the panel holder has at least one through-opening (205), wherein
- the mechanical connection between the composite panel (100) and the panel holder (200) is achieved by a setting process and a resulting riveted joint, wherein
- a rivet (390), comprising a mushroom-shaped head (320) and a shank (310), is threaded with its head (320) through the insertion opening (152) and then placed in the undercut (156) of the retaining region (154) of the groove (150) in the composite panel (100), such that the free end of the shank (310) protrudes from the rear cover sheet (130);
- the panel holder (100) is slipped over the free end of the shank (310) of the rivet (390) via its through-opening (205), such that the panel holder (200) rests on the cover sheet (130);
- the free end of the shank (310) is deformed by a rivet setting tool such that the rivet (390) creates a form-fit between the composite panel (100) and the panel holder (200).

2. Method according to claim 1, **characterized in that**
- the rivet (390) is configured as a through-type rivet, the shank (310) and head (320) of which have a continuous axial through-opening (315) with a diameter D_{I};
- a pull mandrel (330) is provided, having a head (340) with a diameter D_{K} > D_{I} and a pull mandrel shank (350),
- wherein, prior to setting the rivet (390), the pull mandrel (330) is inserted through the axial through-opening (315) of the rivet (390) such that the head (340) of the pull mandrel (330) abuts the head (320) of the rivet (390); and
- the setting process is effected by the rivet setting tool actuating the pull mandrel (330) to produce the riveted joint; and thereby
- the head (340) of the pull mandrel (330) is moved along the axial through-opening (315) of the rivet (390), and the form-fit between the composite panel (100) and the panel holder (200) is achieved by the thus resulting material displacement.

3. Method according to claim 2, **characterized in that**
- the rivet setting tool comprises a tubular mouthpiece (230) having a substantially cylindrical cavity (235) open axially on one side and a receptacle for the pull mandrel shank (350) arranged at the bottom (237) of this cavity (235),
- wherein, for the setting process, the cavity (235) of the mouthpiece (230) is positioned over the free end of the shank (310) such that the rivet setting tool can engage the mandrel shank in a functional manner,
- and the mouthpiece (230) is arranged so that it rests on the rear side of the panel holder (200),
- but a non-contacting gap of 0.1 mm to 2 mm, preferably 0.3 mm to 1 mm, remains between the free end of the shank (310) of the rivet (390) and the bottom (237) of the cavity (235).

4. Method according to claim 3, **characterized in that** as a result of the movement of the head (340) of the pull mandrel (330) along the axial through-opening (315) of the rivet (390)
- a contact force (220) is generated between the mouthpiece (230) resting on the rear side of the panel holder (200) and the mushroom-shaped head (320) of the rivet (390)
- and a displacement of the material surrounding the axial through-opening (315) results both radially outward and in the axial pulling direction of the pull mandrel (330), wherein the material displacement in the axial pulling direction of the pull mandrel (330) is stopped by the free end of the shank (310) of the rivet (390) striking against the bottom (237) of the cavity (235),
- and the material displacement occurs only radially outward.

5. Rivet (390) for carrying out the method according to claims 2-4, comprising
- a shank (310) and a head (320), wherein the head and shank have a continuous axial through-opening (315) with a diameter D_{I};
- a pull mandrel (330) having a head (340) with a diameter D_{K} > D_{I} and a longitudinally extended pull mandrel shank (350),
- wherein the pull mandrel (330) can be inserted into the axial through-opening (315) of the rivet (390) such that, in the end position, the head (340) of the pull mandrel (330) abuts against the head (320) of the rivet (390).

6. Rivet (390) according to claim 5, **characterized in that** an axial recessed cavity (380) is provided on the upper side (322) of the mushroom-shaped head (320) facing away from the shank, which is dimensioned such that it allows for the recessed accommodation of the head (340) attached to the pull mandrel shank (350).

7. Rivet (390) according to claim 5-6, **characterized in that** the underside (324) of the mushroom-shaped head (320) of the rivet (390) facing the shank does not form a plane, but rather has a concave shape and slopes away from the edge toward the shank (310).

8. Rivet (390) according to claim 5-7, **characterized in that** the mushroom-shaped head (320) of the rivet (390) has a circular, square, or oval basic shape.

9. Rivet (390) according to claim 5-8, **characterized in that** the rivet (390) is made of aluminum or an aluminum alloy, in particular an aluminum-magnesium alloy, or of stainless or electroplated steel.

10. Fastening assembly consisting of a composite panel (100) and a panel holder (200), **characterized in that**
- a plurality of grooves (150, 150') is provided on the rear side (140) of the composite panel (100); and
- the panel holder (200) has a plurality of through-openings (205, 205'); and
- the fastening between the composite panel (100) and the panel holder (200) is established by a plurality of setting operations in accordance with the method of claim 1-4
- at least for a subset of the through-openings (205, 205') by means of a corresponding number of rivets (390) according to claim 5-9.

11. Fastening assembly according to claim 10, **characterized in that** at least two of the keyhole-shaped grooves (150, 150') are arranged such that, in the assembly position, they have a common longitudinal axis (160) and are arranged relative to one another such that the two retaining regions (154, 154') face each other at a distance.

12. Fastening assembly according to claim 10, **characterized in that** the axially measured distance D_{N} between the two edges of the retaining regions (154, 154') of the grooves (150, 150') corresponds to between 0.5x and 1.5x the axial length of a retaining region (154, 154').

13. Facade assembly consisting of composite panel facade elements on a building structure, comprising a substructure (270) attached to a building structure with at least one profile beam (280) as well as a plurality of composite panels (100) and panel holders (200), manufactured using fastening assemblies according to claim 10 to 12.

14. Facade assembly according to claim 13, **characterized in that** each panel holder (200) has a hook-shaped anchor (210) configured to engage in a form-fitting manner with a complementarily configured receptacle (290) of the profile beam (280).

15. Facade assembly according to claim 13-14, **characterized in that** a securing element is arranged between the panel holder (200) and the profile beam (280), which mechanically connects the panel holder (200) and the profile beam and prevents accidental loosening of the connection between the panel holder (200) and the profile beam (280).

## Revendications

1. Procédé destiné à produire un système de fixation à partir d'un panneau composite (100) et d'un support de panneau (200), dans lequel
- le panneau composite (100) est réalisé sous forme de panneau sandwich avec une feuille de recouvrement arrière (130), une feuille avant visible (110) et une âme non métallique (120) située entre celles-ci ; et
- sur l'envers (140) du panneau composite (100) au moins une rainure (150) en forme de trou de serrure est prévue ; laquelle présente, sur sa première extrémité longitudinale, une ouverture d'introduction (152) élargie et, sur l'autre extrémité longitudinale, une zone de retenue (154) en forme de trou oblong avec une contre-dépouille (156) dans l'âme (120) ; et
- le support de panneau présente au moins une ouverture traversante (205),
dans lequel
- la liaison mécanique entre le panneau composite (100) et le support de panneau (200) est obtenue par un processus de pose et une liaison par rivetage résultante grâce à
- un rivet (390), comprenant une tête en forme de champignon (320) et une tige (310), avec sa tête (320) qui est insérée à travers l'ouverture d'introduction (152) puis placée dans la contre-dépouille (156) de la zone de retenue (154) de la rainure (150) dans le panneau composite (100) de telle sorte que l'extrémité libre de la tige (310) fasse saillie de la feuille de recouvrement arrière (130) ;
- le support de panneau (100) est déposé par le biais de son ouverture traversante (205) sur l'extrémité libre de la tige (310) du rivet (390) de sorte que le support de panneau (200) repose sur la feuille de recouvrement (130) ;
- l'extrémité libre de la tige (310) est façonnée par un outil de rivetage de sorte que le rivet (390) produise une complémentarité de forme entre le panneau composite (100) et le support de panneau (200).

2. Procédé selon la revendication 1, **caractérisé en ce que**
- le rivet (390) est configuré sous la forme d'un rivet traversant dont la tige (310) et la tête (320) présentent une ouverture traversante axiale continue (315) de diamètre D_{I} ;
- un mandrin (330) est prévu avec une tête (340) de diamètre D_{K} > D_{I} et une tige de mandrin (350),
- dans lequel, avant la pose du rivet (390), le mandrin (330) est déposé à travers l'ouverture traversante axiale (315) du rivet (390) de sorte que la tête (340) du mandrin (330) repose contre la tête (320) du rivet (390) ; et
- le processus de pose est opéré de sorte que l'outil de rivetage active le mandrin (330) pour produire la liaison par rivetage ; et ainsi
- la tête (340) du mandrin (330) est déplacée le long de l'ouverture traversante axiale (315) du rivet (390) et on obtient ainsi le refoulement de matière opéré par la complémentarité de forme entre le panneau composite (100) et le support de panneau (200).

3. Procédé selon la revendication 2, **caractérisé en ce que**
- l'outil de rivetage présente un embout tubulaire (230) avec une cavité sensiblement cylindrique (235) ouverte axialement sur un côté ainsi qu'une réception pour la tige de mandrin (350) agencée au fond (237) de cette cavité (235),
- dans lequel, pour le processus de pose, la cavité (235) de l'embout (230) est agencée au-dessus de l'extrémité libre de la tige (310) de sorte que l'outil de rivetage puisse saisir fonctionnellement la tige de mandrin,
- et l'embout (230) est agencé de manière à reposer sur l'arrière du support de panneau (200),
- mais entre l'extrémité libre de la tige (310) du rivet (390) et le fond (237) de la cavité (235) reste un espace sans contact de 0,1 mm à 2 mm, de préférence 0,3 mm à 1 mm.

4. Procédé selon la revendication 3, **caractérisé en ce que,** par le déplacement de la tête (340) du mandrin (330) le long de l'ouverture traversante axiale (315) du rivet (390),
- entre l'embout (230) reposant sur l'arrière du support de panneau (200) et la tête en forme de champignon (320) du rivet (390) est opérée une force de pression (220)
- et un refoulement de la matière entourant l'ouverture traversante axiale (315) résulte aussi bien radialement vers l'extérieur que dans la direction de traction axiale du mandrin (330), dans lequel le refoulement de matière dans la direction de traction axiale du mandrin (330) est arrêté par la frappe de l'extrémité libre de la tige (310) du rivet (390) contre le fond (237) de la cavité (235),
- et le refoulement de matière ne s'effectue plus que radialement vers l'extérieur.

5. Rivet (390) destiné à mettre en œuvre le procédé selon les revendications 2 à 4, comprenant
- une tige (310) et une tête (320), dans lequel la tête et la tige présentent une ouverture traversante axiale continue (315) de diamètre D_{I} ;
- un mandrin (330) avec une tête (340) de diamètre D_{K} > D_{I} et une tige de mandrin (350) étendue longitudinalement,
- dans lequel le mandrin (330) peut être introduit dans l'ouverture traversante axiale (315) du rivet (390) de telle sorte que, dans la position finale, la tête (340) du mandrin (330) repose contre la tête (320) du rivet (390).

6. Rivet (390) selon la revendication 5, **caractérisé en ce que,** sur la face supérieure (322) de la tête en forme de champignon (320) opposée à la tige, un évidement évidé axialement (380) est prévu, lequel est dimensionné de manière à permettre une réception enfoncée de la tête (340) fixée sur la tige de mandrin (350).

7. Rivet (390) selon les revendications 5 à 6, **caractérisé en ce que** la face inférieure (324) de la tête en forme de champignon (320) du rivet (390) tournée vers la tige ne forme pas un plan, mais présente une forme concave et s'incline du bord vers la tige (310).

8. Rivet (390) selon les revendications 5 à 7, **caractérisé en ce que** la tête en forme de champignon (320) du rivet (390) présente une forme de base circulaire, carrée ou ovale.

9. Rivet (390) selon les revendications 5 à 8, **caractérisé en ce que** le rivet (390) est fabriqué en aluminium ou en alliage d'aluminium, en particulier en alliage d'aluminium-magnésium, respectivement en acier inoxydable ou en acier galvanisé.

10. Système de fixation formé d'un panneau composite (100) et d'un support de panneau (200), **caractérisé en ce que**
- sur l'arrière (140) du panneau composite (100) est prévue une pluralité de rainures (150, 150') ; et
- le support de panneau (200) présente une pluralité d'ouvertures traversantes (205, 205') ; et
- la fixation entre le panneau composite (100) et le support de panneau (200) est produite par une pluralité de processus de pose selon le procédé selon les revendications 1 à 4 ;
- au moins pour un sous-ensemble des ouvertures traversantes (205, 205') à l'aide d'un nombre correspondant de rivets (390) selon les revendications 5 à 9.

11. Système de fixation selon la revendication 10, **caractérisé en ce qu'au** moins deux des rainures en forme de trou de serrure (150, 150') sont agencées de manière à présenter, dans la position de montage, un axe longitudinal commun (160) et à être agencées l'une par rapport à l'autre de sorte que les deux zones de retenue (154, 154') soient espacées l'une de l'autre.

12. Système de fixation selon la revendication 10, **caractérisé en ce que** la distance mesurée axialement D_{N} des deux bords des zones de retenue (154, 154') des rainures (150, 150') l'une par rapport à l'autre correspond entre 0,5 fois et 1,5 fois la longueur axiale d'une zone de retenue (154, 154').

13. Agencement de façade formé d'éléments de façade en panneaux composites sur une structure de bâtiment, comprenant une sous-structure (270) appliquée sur une structure de bâtiment avec au moins un porte-profilé (280) ainsi qu'une multitude de panneaux composites (100) et de supports de panneaux (200), produit en utilisant des systèmes de fixation selon les revendications 10 à 12.

14. Agencement de façade selon la revendication 13, **caractérisé en ce que** chaque support de panneau (200) présente une ancre en forme de crochet (210) qui est réalisée pour s'engager par complémentarité de forme dans une réception (290) du porte-profilé (280) réalisée de manière complémentaire.

15. Agencement de façade selon selon les revendications 13 à 14, **caractérisé en ce que,** entre le support de panneau (200) et le porte-profilé (280), est agencé un élément de verrouillage qui relie mécaniquement le support de panneau (200) et le porte-profilé et empêche un desserrage involontaire de la liaison du support de panneau (200) et du porte-profilé (280).
